# EUROPÄISCHE PATENTSCHRIFT

(11) **EP 4 137 365 B1**
(45) Veröffentlichungstag und Bekanntmachung des Hinweises auf die Patenterteilung: **04.06.2025**
(21) Anmeldenummer: 22189019.7
(22) Anmeldetag: 05.08.2022
(51) Int. Cl.: B60R 11/02

(54) **BEFESTIGUNGSSYSTEM ZUR LÖSBAREN BEFESTIGUNG ELEKTRONISCHER GERÄTE IN EINEM KRAFTFAHRZEUG**
FASTENING SYSTEM FOR THE DETACHABLE FASTENING OF ELECTRONIC DEVICES IN A MOTOR VEHICLE
SYSTÈME DE FIXATION DESTINÉ À LA FIXATION AMOVIBLE DES APPAREILS ÉLECTRONIQUES DANS UN VÉHICULE AUTOMOBILE

(30) Priorität: 13.08.2021 DE 202021104338 U
(43) Veröffentlichungstag der Anmeldung: 22.02.2023
(73) Patentinhaber: Kinetix AG, 7000 Chur (CH)
(72) Erfinder: Spang, Peter, 72178 Waldachtal (DE); Heidinger, Jürgen, 80993 München (DE); Fischer, Wolfgang, 72119 Ammerbuch (DE); Keller, Michael Andreas, 72250 Freudenstadt (DE); Braun, Michael, 72213 Altensteig (DE)
(74) Vertreter: DREISS Patentanwälte PartG mbB

(56) Entgegenhaltungen:
- WO-A1-03/002376
- NATIONAL PRODUCTS: "Catalogue National Products INC.", 1 January 2020 (2020-01-01), pages 1 - 32, XP055818576, Retrieved from the Internet <URL:https://www.realmounts.com.au/assets/catalogues/GDSJan20.pdf> [retrieved on 20210628]

## Beschreibung

Die Erfindung betrifft ein Befestigungssystem zur lösbaren Befestigung elektronischer Geräte in einem Kraftfahrzeug, mit einem Verbindungsabschnitt zur Verbindung mit dem Kraftfahrzeug, mit einem mit dem Verbindungsabschnitt verbundenen ersten Halter, der zum Halten eines ersten elektronischen Geräts einen ersten Halteraum und erste Halteabschnitte aufweist.

Eine solches Befestigungssystem ist - für das Beispiel des Kraftfahrzeugherstellers BMW - unter der Bezeichnung "Travel & Comfort System, Universalhalter" bekannt. Dieses System ermöglicht eine einfache Befestigung eines Tabletcomputers an dem ersten Halter, ggf. auch unter Verwendung eines Schutzrahmens oder einer Schutzhülle für den Tabletcomputer.

Aus einem Katalog der australischen Firma National Products INC. (NPI) vom **1.** Januar 2020 ist ein Befestigungssystem bekannt, bei welchem ein Haltegestell vorgesehen ist, an welchem unterschiedlich große Rahmen anordenbar sind, welche ihrerseits zum Halten unterschiedlich großer Geräte dienen. Die Rahmen weisen jeweils elektrische Kontakte auf, die mit Gegenkontakten des Haltegestells verbindbar sind. Zum Halten eines Geräts ist also in jedem Fall ein Rahmen erforderlich.

Der Erfindung liegt die Aufgabe zugrunde, ein Befestigungssystem der eingangs genannten Art mit noch vielfältigeren Nutzungsmöglichkeiten vorzuschlagen.

Diese Aufgabe wird bei einer Kraftfahrzeugsitzanordnung der eingangs genannten Art gelöst durch die Merkmale des Patentanspruchs **1.**

Das Befestigungssystem ermöglicht wahlweise eine Anordnung eines ersten elektronischen Geräts in dem ersten Halteraum oder die Anordnung eines zweiten Halters, der einen zweiten Halteraum zum Halten eines zweiten elektronischen Geräts aufweist. Insbesondere weist das zweite elektronische Gerät kleinere Abmessungen auf als das erste elektronische Gerät.

Zur Fixierung des zweiten Halters sind diejenigen ersten Halteabschnitte vorgesehen, mit welchen auch - bei Anordnung eines ersten elektronischen Geräts in dem ersten Halteraum - das erste elektronische Gerät an dem ersten Halter gehalten ist.

Das Befestigungssystem weist als Verbindungsabschnitt insbesondere ein mit dem ersten Halter zumindest mittelbar verbundenes Steckteil auf, das an einem Fahrzeugsitz lösbar befestigbar ist, indem das Steckteil in eine an dem Kraftfahrzeugsitz angeordnete Aufnahmebuchse eingeführt und dort fixiert wird, beispielsweise mittels einer Rastvorrichtung.

Bei dem Befestigungssystem kann der erste Halter an seinem Einbauort im Kraftfahrzeug verbleiben, wenn anstelle des ersten elektronischen Geräts ein zweites elektronisches Gerät mit von dem ersten elektronischen Gerät abweichenden Abmessungen verwendet werden soll. Für diesen Fall wird das zweite elektronischen Gerät an dem zweiten Halter angeordnet, und der zweite Halter wird in dem ersten Halteraum des ersten Halters lösbar fixiert.

Insbesondere handelt es sich bei dem ersten elektronischen Gerät um einen Tabletcomputer und bei dem zweiten elektronischen Gerät um ein Smartphone. Der zweite Halter kann auch als "Adapter" bezeichnet werden, bei welchem es sich insbesondere um einen Smartphone-Adapter handelt.

Vorzugsweise sind die ersten Halteabschnitte auf einander gegenüberliegenden Seiten des ersten Halteraums angeordnet, um wahlweise ein erstes elektronisches Gerät oder den zweiten Halter an dem ersten Halter zu fixieren. Auf diese Weise können elektronische Geräte, welche üblicherweise eine Rechteckform aufweisen, an zwei voneinander abgewandten Seiten fixiert werden. Zu diesem Zweck ist es bevorzugt, dass die ersten Halteabschnitte klammerförmig ausgebildet sind und einen Randbereich der Vorderseite eines ersten elektronischen Geräts oder die Vorderseite des zweiten Halters formschlüssig übergreifen.

Ein Abstand zwischen den ersten Halteabschnitten ist veränderbar. Auf diese Weise kann die Höhe des ersten Halteraums verändert werden, sodass unterschiedlich hohe erste elektronische Geräte, unterschiedliche hohe zweite Halter oder zweite Halter mit variablen Abmessungen in dem ersten Halteraum angeordnet und dort fixiert werden können.

Zur Fixierung des zweiten Halters in dem ersten Halteraum wird vorgeschlagen, dass der zweite Halter mindestens einen Randabschnitt zur Anordnung in einem der ersten Halteabschnitte aufweist. Dieser Randabschnitt des zweiten Halters ist dann also anstelle eines entsprechenden Randabschnitts eines ersten elektronischen Geräts in dem ersten Halteraum des ersten Halters aufgenommen und an einem der ersten Halteabschnitte fixiert, insbesondere in Entnahmerichtung formschlüssig fixiert.

Zur Befestigung des zweiten elektronischen Geräts an dem zweiten Halter ist es bevorzugt, wenn mindestens ein zweiter Halteabschnitt der zwei Halteabschnitte zur Befestigung einer Begrenzungskante des zweiten elektronischen Geräts dient. Auch dieser zweite Halteabschnitt kann klammerförmig ausgebildet sein, also eine Vorderseite eines zweiten elektronischen Geräts in einem zu einer Seitenkante des zweiten elektronischen Geräts benachbarten Bereich übergreifen.

Es ist ferner bevorzugt, dass der mindestens eine zweite Halteabschnitt zu dem mindestens einen Randabschnitt beabstandet ist, wodurch bei Anordnung des zweiten Halters in dem ersten Halteraum des ersten Halters der mindestens eine zweite Halteabschnitt zu dem ersten Halteabschnitt, in welchem der Randabschnitt gehalten ist, derart beabstandet ist, dass ein Teil des ersten Halteraums durch den Abstand zwischen dem mindestens einen zweiten Halteabschnitt und dem Randabschnitt überbrückt wird. Hierdurch kann in einem größeren ersten Halteraum ein vergleichsweise kleineres zweites elektronisches Gerät, das an dem zweiten Halter gehalten ist, angeordnet werden.

Erfindungsgemäß weist der zweite Halter zwei zweite Halteabschnitte auf, welche zur Befestigung von einander abgewandten Begrenzungskanten des zweiten elektronischen Geräts dienen und welche auf einander gegenüberliegenden Seiten des zweiten Halteraums angeordnet sind. Auf diese Weise kann mittels des zweiten Halters eine Befestigung eines zweiten elektronischen Geräts in einer Art und Weise erfolgen, mit welcher auch ein erstes elektronisches Gerät in dem ersten Halteraum des ersten Halters fixierbar ist.

Erfindungsgemäß ist ein Abstand zwischen den zwei zweiten Halteabschnitten veränderbar. Dies ermöglicht es, die Größe des zweiten Halteraums zu variieren, insbesondere um unterschiedlich große zweite elektronische Geräte an dem zweiten Halter fixieren zu können.

Es ist ferner bevorzugt, wenn die zwei zweiten Halteabschnitte in einander entgegengesetzten Richtungen vorgespannt sind. Dabei kann die Vorspannung dazu dienen, ein zweites elektronisches Gerät unter Vorspannung zu umklammern. Die Vorspannung der zweiten Halteabschnitte kann auch dazu dienen, dass sichergestellt ist, dass der zweite Halter innerhalb des ersten Halteraums diesen ersten Halteraum unter Vorspannung ausfüllt.

Zur Fixierung oder zum Halten des zweiten elektronischen Geräts an dem zweiten Halter wird für eine Anordnung des zweiten Halters in dem ersten Halteraum vorgeschlagen, dass das zweite elektronische Gerät zumindest von einem zweiten Halteabschnitt des zweiten Halters gehalten ist. Gleichzeitig kann das zweite elektronische Gerät von einem weiteren zweiten Halteabschnitt des zweiten Halters und/oder von einem der ersten Halteabschnitte des ersten Halters gehalten sein.

Bei einer Fixierung des zweiten elektronischen Geräts an zwei zweiten Halteabschnitten des zweiten Halters, kann das zweite elektronische Gerät auch an dem zweiten Halter fixiert sein, wenn der zweite Halter nicht in dem ersten Halteraum des ersten Halters angeordnet ist.

Bei einer Fixierung des zweiten elektronischen Geräts an einem zweiten Halteabschnitt des zweiten Halters und an einem ersten Halteabschnitt des ersten Halters übernimmt der erste Halter einen Teil der Haltefunktion zum Halten des zweiten elektronischen Geräts an dem zweiten Halter.

Für eine zuverlässige Fixierung des zweiten elektronischen Geräts an dem zweiten Halter wird vorgeschlagen, dass der zweite Halteraum durch elastische Form- oder Reibschlusselemente begrenzt ist, welche mit Begrenzungskanten des zweiten elektronischen Geräts und/oder mit einer dem ersten Halter zugewandten Rückseite des zweiten elektronischen Geräts zusammenwirken. Auf diese Weise können auch unterschiedlich dicke zweite elektronische Geräte zuverlässig und klapperfrei an dem zweiten Halter fixiert werden.

Für eine besonders flexible Nutzung des Befestigungssystems ist es bevorzugt, dass der erste Halteraum in Gebrauchslage des Befestigungssystems seitlich offen ist und/oder dass der zweite Halteraum in Gebrauchslage des Befestigungssystems seitlich offen ist. Dies bedeutet, dass die jeweiligen Halteräume nur an ihrem in Gebrauchslage des Befestigungssystems oberen Ende und unteren Ende begrenzt sind (beispielsweise durch Halteabschnitte oder Form- oder Reibschlusselemente).

Für einen kompakten Aufbau des Befestigungssystems ist es bevorzugt, dass eine in Gebrauchslage des Befestigungssystems gemessene Breite des ersten Halteraum einer in Gebrauchslage des Befestigungssystems gemessenen Breite des zweiten Halteraums entspricht.

Für einen kompakten Aufbau des Befestigungssystems ist es ferner bevorzugt, wenn bei Anordnung des ersten elektronischen Geräts in Form eines Tabletcomputers an dem ersten Halter der Tabletcomputer den ersten Halteraum auf voneinander abgewandten Seiten des ersten Halteraums überragt.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt
- Fig. 1: eine perspektivische Ansicht einer Ausführungsform eines Befestigungssystems;
- Fig. 2: eine Vorderansicht des Befestigungssystems gemäß Fig. 1;
- Fig. 3: eine Seitenansicht des Befestigungssystems gemäß Fig. 1;
- Fig. 4: einen Vertikalschnitt des Befestigungssystems gemäß Fig. 1 entlang einer in Fig. 2 mit IV - IV bezeichneten Schnittlinie;
- Fig. 5: einen Vertikalschnitt des Befestigungssystems gemäß Fig. 1 entlang einer in Fig. 2 mit V - V bezeichneten Schnittlinie;
- Fig. 6: eine der Fig. 1 entsprechende Darstellung bei Anordnung eines vergleichsweise größeren elektronischen Geräts;
- Fig. 7: eine perspektivische Ansicht einer weiteren Ausführungsform eines Befestigungssystems;
- Fig. 8: eine Vorderansicht des Befestigungssystems gemäß Fig. 7;
- Fig. 9: eine Seitenansicht des Befestigungssystems gemäß Fig. 7;
- Fig. 10: einen Vertikalschnitt des Befestigungssystems gemäß Fig. 7 entlang einer in Fig. 8 mit X - X bezeichneten Schnittlinie;
- Fig. 11: einen Vertikalschnitt des Befestigungssystems gemäß Fig. 7 entlang einer in Fig. 8 mit XI - XI bezeichneten Schnittlinie; und
- Fig. 12: eine der Fig. 7 entsprechende Darstellung bei Anordnung eines vergleichsweise größeren elektronischen Geräts.

Ein in der Zeichnung dargestelltes Befestigungssystem ist insgesamt mit dem Bezugszeichen 10 bezeichnet. Es umfasst einen Verbindungsabschnitt 12 in Form eines Steckteils 14, das insbesondere rastend in einer Aufnahmebuchse 16 lösbar fixierbar ist. Die Aufnahmebuchse 16 ist insbesondere Teil einer Kraftfahrzeugsitzanordnung und ist beispielsweise im Bereich einer Rückenlehne eines Kraftfahrzeugsitzes angeordnet. Zur Verbindung zwischen dem Steckteil 14 und der Aufnahmebuchse 16 genügt es, das Steckteil 14 einer Einsteckrichtung 18 entsprechend in die Aufnahmebuchse 16 einzuführen und dort zu verrasten.

Das Befestigungssystem 10 weist mindestens einen Zwischenabschnitt 20, 22 auf, wobei ein erster Verbindungsabschnitt 20 relativ zu dem Steckteil 14 um eine erste Schwenkachse 24 verschwenkbar ist und über eine zweite Schwenkachse 26 gelenkig mit dem zweiten Zwischenabschnitt 22 verbunden ist.

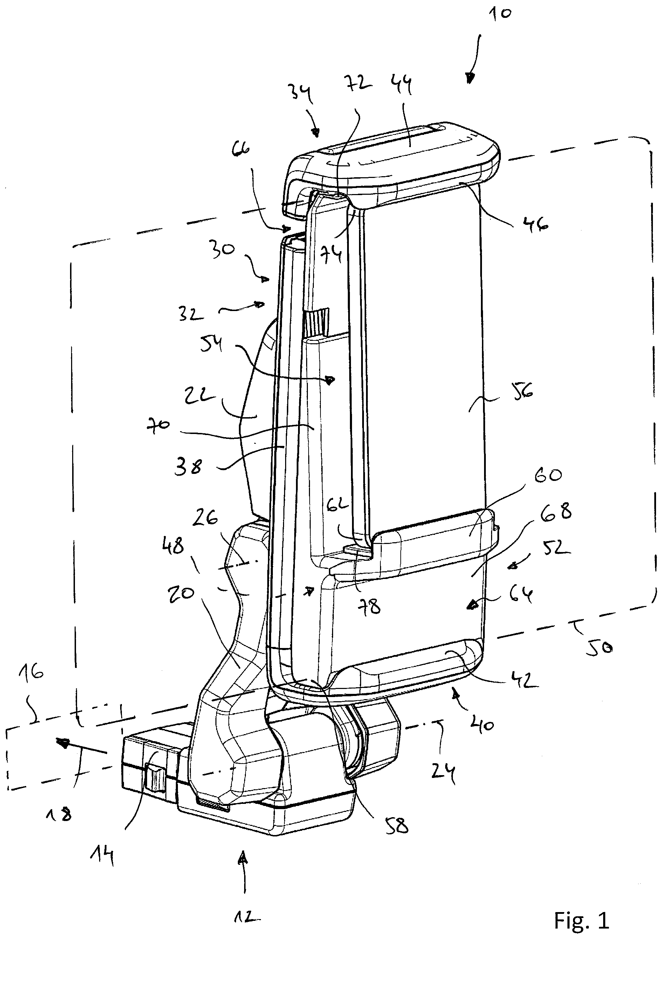

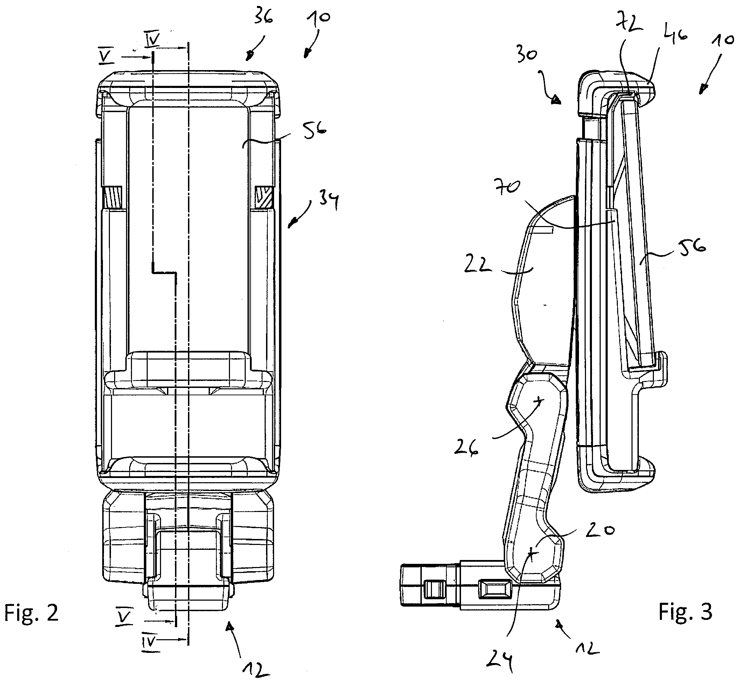

Der zweite Zwischenabschnitt 22 definiert eine Drehachse 28 für einen an dem zweiten Zwischenabschnitt 22 drehbar gelagerten ersten Halter 30, vergleiche insbesondere Figuren 1, 3 und **4****.** Bei Anordnung in einem Kraftfahrzeug verlaufen die Schwenkachsen 24 und 26 und die Drehachse 28 im Wesentlichen horizontal, wobei sich die Schwenkachsen 24 und 26 üblicherweise in einer Fahrzeugquerrichtung erstrecken und sich die Drehachse 28 in einer Fahrzeuglängsrichtung erstreckt.

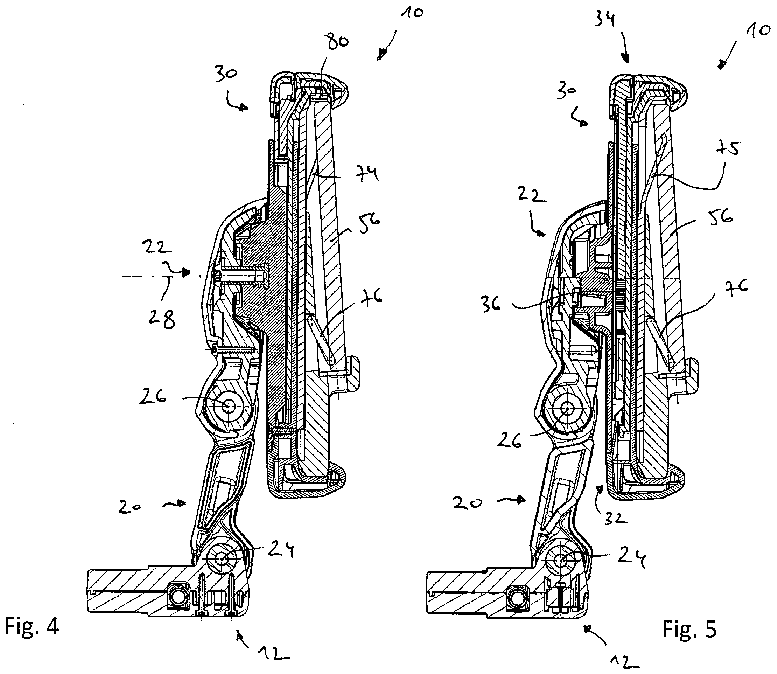

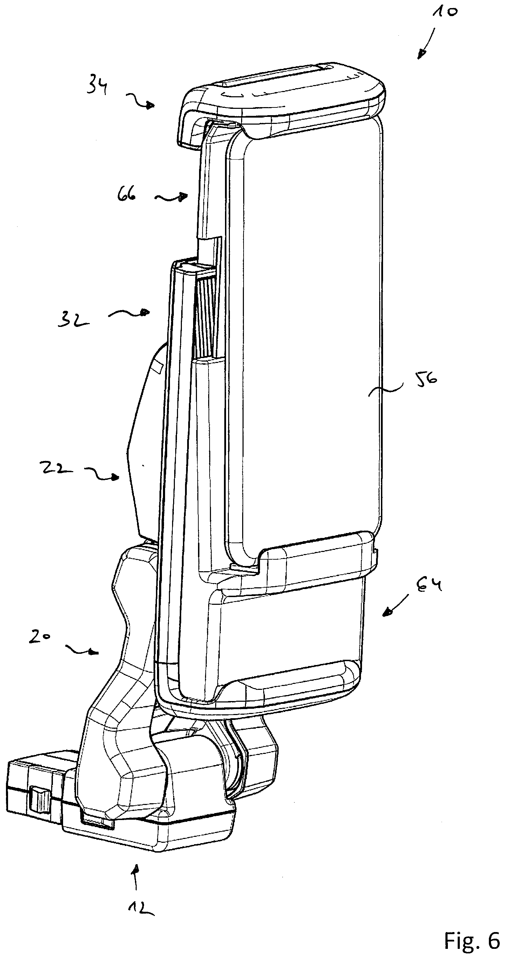

Der zweite Halter 30 weist ein Basisteil 32 und ein Deckelteil 34 auf, deren Abstand zueinander veränderbar ist, vergleiche Figuren 1 und **6****.** Zu diesem Zweck ist das Deckelteil 34 mittels einer an sich bekannten Linearführung an dem Basisteil 32 geführt. Das Basisteil 32 und Deckelteil 34 sind relativ zueinander verrastbar und optional mittels einer Feder 36, vergleiche Figur 5, in einander zugewandten Richtungen vorgespannt.

Das Basisteil 32 weist einen Rückabschnitt 38 und einen Fußabschnitt 40 auf, an welchem ein erster Halteabschnitt 42 ausgebildet ist, vergleiche Figur 1.

Das Deckelteil 34 weist einen Kopfabschnitt 44 mit einem weiteren ersten Halteabschnitt 46 auf.

Zwischen dem Fußabschnitt 40 und dem Kopfabschnitt 44 ist ein erster Halteraum 48 des ersten Halters 30 begrenzt. Dieser erste Halteraum 48 dient beispielsweise zur Anordnung eines ersten elektronischen Geräts 50, das in Figur 1 schematisch mit einem rechteckförmigen Umriss angedeutet ist und beispielsweise als Tabletcomputer ausgebildet ist.

Anstelle des ersten elektronischen Geräts 50 kann in dem ersten Halteraum 48 ein zweiter Halter 52 angeordnet sein, der einen zweiten Halteraum 54 zum Halten eines zweiten elektronischen Geräts 56 aufweist.

Der zweite Halter 52 weist einen Randabschnitt 58 auf, der zur Anordnung in einem ersten Halteabschnitt 42 des ersten Halters 30 dient, dort also anstelle eines Randbereiches eines ersten elektronischen Geräts 50 aufnehmbar ist.

Der zweite Halter 52 weist ferner einen zweiten Halteabschnitt 60 zur Befestigung einer Begrenzungskante 62 des zweite elektronischen Geräts 56 auf.

Der zweite Halteabschnitt 60 und der Randabschnitt 58 sind zueinander beabstandet und sind zueinander unbewegbar.

Der Randabschnitt 58 und der zweite Halteabschnitt 60 sind an einem insgesamt mit dem Bezugszeichen 64 bezeichneten Unterteil des zweiten Halters 52 angeordnet, wobei ein Oberteil 66 des zweiten Halters 52 relativ zu dem Unterteil 64 bewegbar ist, sodass ein Abstand des Oberteils 66 zu dem Unterteil 64 einstellbar ist, vergleiche Figuren 1 und **6****.**

Das Unterteil 64 weist einen ersten Materialabschnitt 68 zur Ausbildung des Randabschnitts 58 und zur Beabstandung des zweiten Halteabschnitts 60 zu dem Randabschnitt 58 auf. Das Unterteil 64 weist ferner einen zweiten Materialabschnitt 70 auf, der zur Lagerung des Oberteils 66 dient.

Das Oberteil 66 weist einen weiteren zweiten Halteabschnitt 72 auf, der eine Begrenzungskante 74 des zweiten elektronischen Geräts 56 überdeckt, jedoch nicht übergreift.

Das Unterteil 64 und das Oberteil 66 sind in zueinander entgegengesetzten und voneinander abweisenden Richtungen vorgespannt, sodass die zweiten Halteabschnitte 60 und 72 des zweiten Halters 52 bestrebt sind, einen zueinander maximalen Abstand relativ zueinander einzunehmen. Auf diese Weise ist sichergestellt, dass der zweite Halter 52 unter Vorspannung in dem ersten Halteraum 48 des ersten Halters 30 angeordnet ist.

Bei dem Befestigungssystem 10 gemäß Figuren 1 bis 6 übernimmt ein erster Halteabschnitt, hier der (obere) erste Halteabschnitt 46, des ersten Halters 30 einen Teil der Haltefunktion für das zweite elektronische Gerät 56, das sowohl von dem (oberen) ersten Halteabschnitt 46 als auch von dem zweiten Halteabschnitt 60 des zweiten Halters 52 formschlüssig umklammert ist.

Für einen präzisen Halt des zweiten elektronischen Geräts 56 in dem Aufnahmeraum 54 des zweiten Halters 52 können Reibschlusselemente 74, 76 vorgesehen sein, welche in Form von Laschen ausgebildet sein können und mit einer dem ersten Halter 30 zugewandten Rückseite des elektronischen Geräts 56 zusammenwirken, vergleiche Figuren 4 und 5 (in Figur 5 in einem entspannten Ruhezustand dargestellt). Benachbart zu den Begrenzungskanten 62 und 74 des elektronischen Geräts 56 können weitere Form- oder Reibschlusselemente 78, 80 angeordnet sein, vergleiche Figuren 1 und **4****,** beispielsweise in Form von Elastomerlippen oder -schienen.

Zur Nutzung des Befestigungssystems 10 wird ein Ausgangszustand angenommen, in welchem der erste Halteraum 48 des ersten Halters 30 nicht belegt. Ausgehend von diesem Zustand kann entweder ein erstes elektronisches Gerät 50 in dem ersten Halteraum 48 angeordnet werden, wobei ein Abstand zwischen dem Basisteil 32 und dem Basisteil 34 so groß zu wählen ist, dass das elektronische Gerät 50 in den ersten Halteraum 48 einführbar ist. Durch Bewegung des Deckelteils 34 in Richtung auf das Basisteil 32 kann das erste elektronische Gerät 50 dann fixiert werden, wobei die ersten Halteabschnitte 42 und 46 das erste elektronische Gerät 50 umklammern.

Anstelle der Anordnung eines ersten elektronischen Geräts 50 kann auch zunächst nur der zweite Halter 52 in dem ersten Aufnahmeraum 48 angeordnet werden. Zu diesem Zweck ist es möglich, zunächst nur den Randabschnitt 58 des zweiten Halters 52 innerhalb des (unteren) ersten Halteabschnitts 42 des ersten Halters 30 anzuordnen und dabei das Oberteil 66 und das Unterteil 64 soweit gegeneinander zu drücken, dass der erste Halter 52 in den ersten Halteraum 48 des erste Halters 30 einführbar ist. Davon ausgehend wird vorzugsweise durch Federvorspannung das Oberteil 66 so bewegt, dass das Oberteil 66 einen größeren Abstand zu dem Unterteil 64 einnimmt und sodass das Oberteil 66 mit seinem zweiten Halteabschnitt 72 in Eingriff mit dem (oberen) ersten Halteabschnitt 46 des ersten Halters 30 gelangt.

Zur anschließenden Positionierung des zweiten elektronischen Geräts 56 in dem zweiten Halteraum 54 des zweiten Halters 52 kann das zweite elektronische Gerät 56 zunächst mit der unteren Begrenzungskante 62 in den Eingriffsbereich des (unteren) zweiten Halteabschnitt 60 gebracht werden und anschließend mit der oberen Begrenzungskante 74 aus einem Bereich außerhalb des (oberen) ersten Halteabschnitts 46 in den Eingriffsbereich des (oberen) ersten Halteabschnitts 46 verbracht werden, indem das zweite elektronische Gerät 56 mit seiner oberen Begrenzungskante 74 gegen die Außenseite des (oberen) ersten Halteabschnitts 46 gedrückt wird. Hierdurch weicht das Deckelteil 34 entgegen der Wirkung der Feder 36 nach oben aus; das zweite elektronische Gerät 56 gelangt vollständig in den ersten Aufnahmeraum 54 des zweiten Halters 52, und anschließend bewegt sich das Deckelteil 34, bedingt durch die Feder 36, wieder in Richtung auf das Basisteil 32. In diesem Zustand ist das zweite elektronische Gerät 56 an dem zweiten Halter 52 fixiert, während der zweite Halter 52 seinerseits an dem ersten Halter 30 fixiert ist.

Zur Entnahme des zweiten elektronischen Geräts 56 ist es möglich, das Deckelteil 34 entgegen der Wirkung der Feder 36 nach oben zu bewegen und das zweite elektronische Gerät 56 aus dem zweiten Halteraum 54 zu entnehmen.

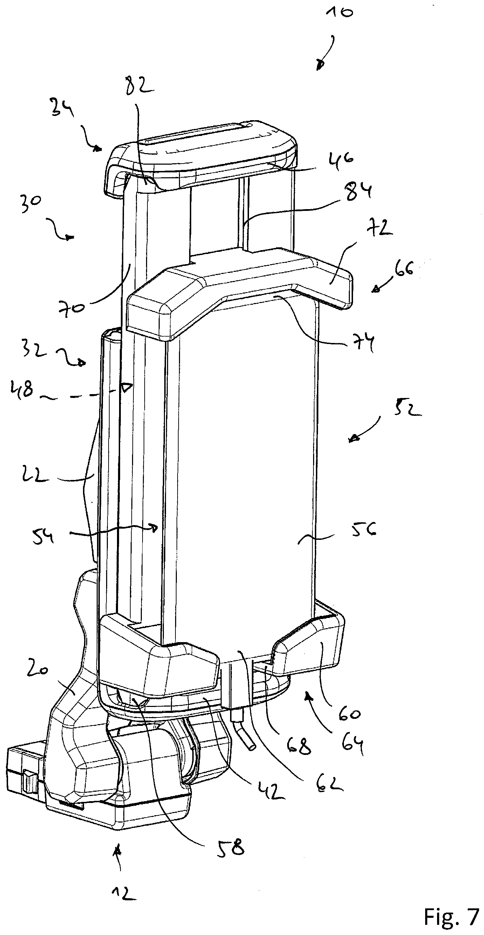

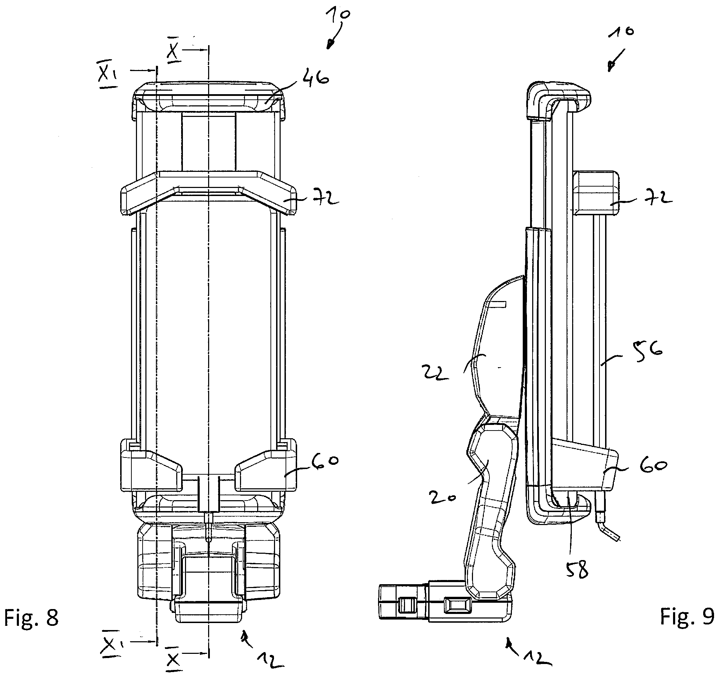

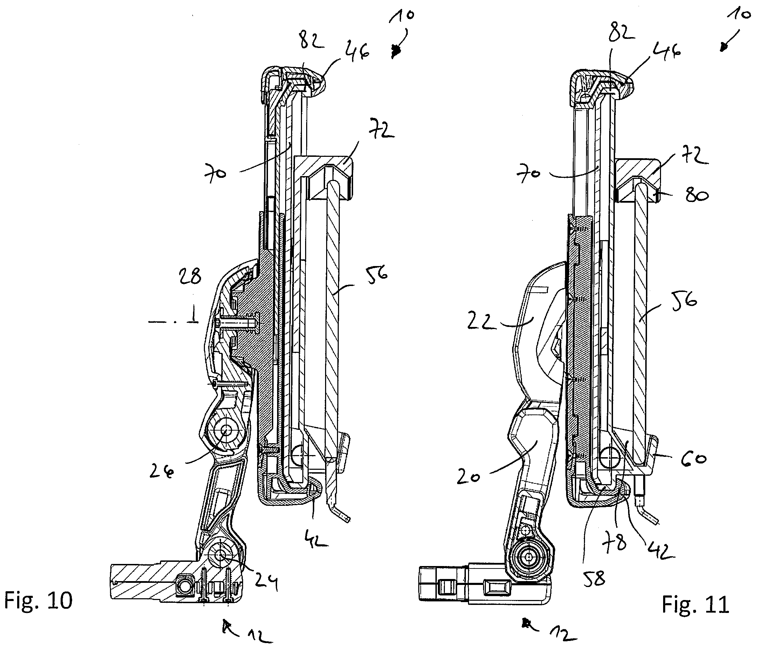

Bei der vorstehend unter Bezugnahme auf Figuren 1 bis 6 beschriebenen Ausführungsform übernimmt einer der ersten Halteabschnitte des ersten Halters 30, hier der (obere) erste Halteabschnitt 46, eine Haltefunktion für das zweite elektronische Gerät 56. Bei einem nachfolgend unter Bezugnahme auf Figuren 7 bis 12 beschrieben Ausführungsform eines Befestigungssystems 10 wird eine Haltefunktion an der oberen Begrenzungskante 74 des zweiten elektronischen Geräts 56 durch einen zweiten Halteabschnitt 72 des zweiten Halters 52 realisiert, der von dem (oberen) ersten Halteabschnitt 46 des ersten Halters 30 unabhängig bereitgestellt ist.

Für den Aufbau und die Funktionsweise des Befestigungssystems 10 gemäß Figuren 7 bis 12 wird auf die vorstehende Beschreibung zu Figuren 1 bis 6 Bezug genommen; nachfolgend wird auf die Besonderheiten des Befestigungssystems 10 gemäß Figuren 7 bis 12 eingegangen.

Der erste Materialabschnitt 68 des Unterteils 64 des zweiten Halters 52 weist eine nur kleine Bauhöhe auf; hingegen weist der zweite Materialabschnitt 70 des Unterteils 64 eine Länge auf, welche größer ist als eine maximale Höhe des elektronischen Geräts 56. Der zweite Materialabschnitt 70 erstreckt sich bis zu einem Anschlag 82, vergleiche Figur **7****.** Der Anschlag 82 ist in dem (oberen) ersten Halteabschnitt 46 des ersten Halters 30 aufgenommen. Der Abstand zwischen dem Randabschnitt 58 und dem Anschlag 82 ist unveränderbar. Der erste Halteabschnitt 46 ist bewegbar / gelenkig gefedert an dem Deckelteil 34 gelagert.

An dem zweiten Materialabschnitt 70 des zweiten Halters 52 ist eine Führung 84 für den (oberen) zweiten Halteabschnitt 72 des zweiten Halters 72 vorgesehen. Durch Veränderung der Positionen des zweiten Halteabschnitts 72 relativ zu dem Unterteil 64 ist ein Abstand zwischen den zwei zweiten Halteabschnitten 60 und 72 des zweiten Halters 52 einstellbar, sodass unterschiedlich große zweite elektronische Geräte 56 in dem zweiten Halteraum 54 des zweiten Halters 52 aufgenommen und dort fixiert werden können.

Die zwei zweiten Halteabschnitte 60 und 62 sind in Richtung auf einander zu vorgespannt, sodass die zwei zweiten Halteabschnitte 60 und 72 bestrebt sind, einen möglichst kleinen Abstand relativ zueinander einzunehmen.

Ausgehend von einem Zustand, in welchem der erste Halteraum 48 des ersten Halters 30 nicht belegt ist und in welchem ein bestimmter Abstand zwischen dem Basisteil 32 und dem Deckelteil 34 eingestellt ist, kann ein erstes elektronisches Gerät 50 (vergleiche Figur 1) in dem ersten Halteraum 48 angeordnet werden. Diesbezüglich wird auf die vorstehende Beschreibung verwiesen.

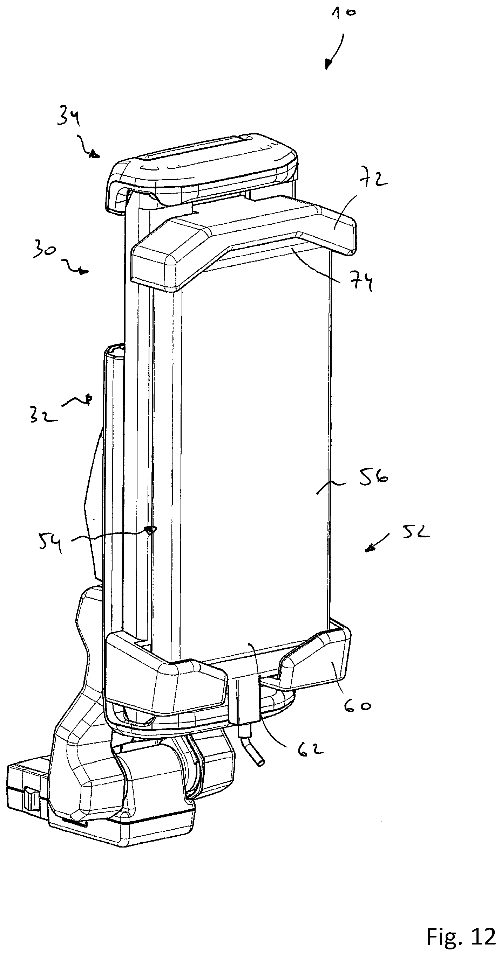

Zur Anordnung des zweiten Halters 52 wird der Randabschnitt 48 des zweiten Halters 52 in Eingriff mit dem (unteren) ersten Halteabschnitt 42 des ersten Halters 30 gebracht, wobei der Anschlag 82 zunächst noch außer Eingriff mit dem (oberen) ersten Halteabschnitt 46 des ersten Halters 30 steht. Durch Verkippen des zweiten Materialabschnitts 70 in den Aufnahmeraum 48 hinein federt der (obere) erste Halteabschnitt 46 aus, sodass der Anschlag 82 in dem Umklammerungsbereich des (oberen) ersten Halteabschnitts 46 anordenbar ist und dort fixiert wird, wobei ein Abstand zwischen dem Basisteil 32 und dem Deckelteil 34 des ersten Halters 30 ausschließlich von der Baugröße des zweiten Halters 52 abhängig ist und nicht von der Größe bzw. Höhe eines zu haltenden zweiten elektronischen Geräts 56, vergleiche Figuren 7 und 12.

Zur Anordnung eines zweiten elektronischen Geräts 56 an dem zweiten Halter 52 kann das zweite elektronische Gerät 56 zunächst mit seiner oberen Begrenzungskante 54 in Eingriff mit dem (oberen) zweiten Halteabschnitt 72 gebracht werden, um diesen gemeinsam mit dem zweiten elektronischen Gerät 56 in Richtung auf den (oberen) ersten Halteabschnitt 46 des ersten Halters 30 zu verschieben, und zwar so weit, bis die untere Begrenzungskante 62 des zweiten elektronischen Geräts 56 in den Wirkbereich des (unteren) zweiten Halteabschnitts 60 einführbar ist. Die anschließende Fixierung des zweiten elektronischen Geräts 56 erfolgt durch Federkraft, welche den (oberen) zweiten Halteabschnitt 72 in Richtung auf den (unteren) zweiten Halteabschnitt 60 drängt.

Für eine Entnahme des zweiten elektronischen Geräts 56 kann dieses gemeinsam mit dem (oberen) zweiten Halteabschnitt 72 nach oben verschieben werden, bis die untere Begrenzungskante 72 außer Eingriff mit dem (unteren) zweiten Halteabschnitt 60 gelangt und das zweite elektronische Gerät 56 aus dem zweiten Halteraum 54 des ersten Halters 52 entfernt werden kann.

## Patentansprüche

1. Befestigungssystem (10) zur lösbaren Befestigung elektronischer Geräte in einem Kraftfahrzeug, mit einem Verbindungsabschnitt (12) zur Verbindung mit dem Kraftfahrzeug, mit einem mit dem Verbindungsabschnitt (12) verbundenen ersten Halter (30), der zum Halten eines ersten elektronischen Geräts (50) einen ersten Halteraum (48) und erste Halteabschnitte (42, 46) aufweist, mit einem zweiten Halter (52) mit einem zweiten Halteraum (54) zum Halten eines zweiten elektronischen Geräts (56), wobei der zweite Halter (52) in dem ersten Halteraum (48) anordenbar oder angeordnet ist und an den ersten Halteabschnitten (42, 46) lösbar fixierbar oder fixiert ist, wobei ein Abstand zwischen den ersten Halteabschnitten (42, 46) veränderbar ist, **dadurch gekennzeichnet, dass** der zweite Halter (52) zwei zweite Halteabschnitte (60, 72) aufweist, welche zur Befestigung von einander abgewandten Begrenzungskanten (62, 74) des zweiten elektronischen Geräts (56) dienen und welche auf einander gegenüberliegenden Seiten des zweiten Halteraums (54) angeordnet sind, wobei ein Abstand zwischen den zwei zweiten Halteabschnitten (60, 72) veränderbar ist.

2. Befestigungssystem (10) nach Anspruch 1, **dadurch gekennzeichnet, dass** das erste elektronische Gerät (50) ein Tabletcomputer ist und dass das zweite elektronische Gerät (56) ein Smartphone ist.

3. Befestigungssystem (10) nach einem der vorstehenden Ansprüche, **dadurch gekennzeichnet, dass** die ersten Halteabschnitte (42, 46) auf einander gegenüberliegenden Seiten des ersten Halteraums (48) angeordnet sind.

4. Befestigungssystem (10) nach einem der vorstehenden Ansprüche, **dadurch gekennzeichnet, dass** der zweite Halter (52) mindestens einen Randabschnitt (58) zur Anordnung in einem der ersten Halteabschnitte (42) aufweist.

5. Befestigungssystem (10) nach einem der vorstehenden Ansprüche, **dadurch gekennzeichnet, dass** mindestens ein zweiter Halteabschnitt (60) der zwei Halteabschnitte (60, 72) zur Befestigung einer Begrenzungskante des zweiten elektronischen Geräts (56) dient.

6. Befestigungssystem (10) nach Anspruch 5 bei Rückbezug auf Anspruch 4, **dadurch gekennzeichnet, dass** der mindestens eine zweite Halteabschnitt (60) zu dem mindestens einen Randabschnitt (58) beabstandet ist.

7. Befestigungssystem (10) nach einem der vorstehenden Ansprüche, **dadurch gekennzeichnet, dass** die zwei zweiten Halteabschnitte (60, 72) in einander entgegengesetzten Richtungen vorgespannt sind.

8. Befestigungssystem (10) nach einem der vorstehenden Ansprüche, **dadurch gekennzeichnet, dass** - bei Anordnung des zweiten Halters (52) in dem ersten Halteraum (48) und bei Anordnung des zweiten elektronischen Geräts (56) in dem zweiten Halteraum (54) - das zweite elektronische Gerät (56) gehalten ist:
a) von einem zweiten Halteabschnitt (60) des zweiten Halters (52) und
b) von einem weiteren zweiten Halteabschnitt (72) des zweiten Halters (52) und/oder von einem der ersten Halteabschnitte (42, 46) des ersten Halters (30).

9. Befestigungssystem (10) nach einem der vorstehenden Ansprüche, **dadurch gekennzeichnet, dass** der zweite Halteraum (54) durch elastische Form- oder Reibschlusselemente (79, 76, 78, 80) begrenzt ist, welche mit Begrenzungskanten (62, 74) des zweiten elektronischen Geräts (56) und/oder mit einer dem ersten Halter (30) zugewandten Rückseite des zweiten elektronischen Geräts (56) zusammenwirken.

10. Befestigungssystem (10) nach einem der vorstehenden Ansprüche, **dadurch gekennzeichnet, dass** der erste Halteraum (48) in Gebrauchslage des Befestigungssystems (10) seitlich offen ist und/oder dass der zweite Halteraum (54) in Gebrauchslage des Befestigungssystems (10) seitlich offen ist.

11. Befestigungssystem (10) nach einem der vorstehenden Ansprüche, **dadurch gekennzeichnet, dass** eine in Gebrauchslage des Befestigungssystems (10) gemessene Breite des ersten Halteraum (48) einer in Gebrauchslage des Befestigungssystems (10) gemessenen Breite des zweiten Halteraums (54) entspricht.

12. Befestigungssystem (10) nach einem der vorstehenden Ansprüche, **dadurch gekennzeichnet, dass** bei Anordnung des ersten elektronischen Geräts (50) in Form eines Tabletcomputers an dem ersten Halter (30) der Tabletcomputer den ersten Halteraum (48) auf voneinander abgewandten Seiten des ersten Halteraums (48) überragt.

## Claims

1. A mounting system (10) for detachably mounting electronic devices in a motor vehicle, comprising a connecting section (12) for connection to the motor vehicle, with a first holder (30) connected to connecting section (12), which first holder (30) has a first holding space (48) and first holding sections (42, 46) for holding a first electronic device (50), further comprising a second holder (52) with a second holding space (54) for holding a second electronic device (56), wherein second holder (52) can be arranged or is arranged in first holding space (48) and can be detachably fixed or is detachably fixed to first holding sections (42, 46), wherein a gap between first holding sections (42, 46) can be modified, **characterized in that** second holder (52) comprises two second holding sections (60, 72), which serve to mount boundary edges (62, 74) opposite one another of second electronic device (56) and which are arranged on sides opposite one another of second holding space (54), wherein a gap between two second holding sections (60, 72) can be modified.

2. The mounting system (10) according to claim **1, characterized in that** the first electronic device (50) is a tablet computer and that the second electronic device (56) is a smartphone.

3. The mounting system (10) according to any one of the preceding claims, **characterized in that** the first holding sections (42, 46) are arranged on sides opposite one another of the first holding space (48).

4. The mounting system (10) according to any one of the preceding claims, **characterized in that** the second holder (52) comprises at least one edge section (58) for an arrangement in one of the first holding sections (42).

5. The mounting system (10) according to any one of the preceding claims, **characterized in that** at least one second holding section (60) of the two second holding sections (60, 72) serves for mounting a boundary edge of the second electronic device (56).

6. The mounting system (10) according to claim **5,** with reference back to claim **4, characterized in that** the at least one second holding section (60) is spaced apart from the at least one edge section (58).

7. The mounting system (10) according to any one of the preceding claims, **characterized in that** the two second holding sections (60, 72) are preloaded in directions opposite to one another.

8. The mounting system (10) according to any one of the preceding claims, **characterized in that** - when the second holder (52) is arranged in the first holding space (48) and when the second electronic device (56) is arranged in the second holding space (54) - the second electronic device (56) is held:
a) By a second holding section (60) of the second holder (52) and
b) By an additional second holding section (72) of the second holder (52) and/or by one of the first holding sections (42, 46) of the first holder (30).

9. The mounting system (10) according to any one of the preceding claims, **characterized in that** the second holding space (54) is delimited by elastic positive-locking or frictional locking elements (79, 76, 78, 80), which cooperate with boundary edges (62, 74) of the second electronic device (56) and/or with a rear side of the second electronic device (56) facing the first holder (30).

10. The mounting system (10) according to any one of the preceding claims, **characterized in that** the first holding space (48) is laterally open in the position of use of the mounting system (10) and/or that the second holding space (54) is laterally open in the position of use of the mounting system (10).

11. The mounting system (10) according to any one of the preceding claims, **characterized in that** a width of the first holding space (48) measured in the position of use of the mounting system (10) corresponds to a width of the second holding space (54) measured in the position of use of the mounting system (10).

12. The mounting system (10) according to any one of the preceding claims, **characterized in that**, when the first electronic device (50) in the form of a tablet computer is arranged at the first holder (30), the tablet computer overhangs the first holding space (48) on sides of the first holding space (48) facing away from each other.

## Revendications

1. Système de fixation (10) pour la fixation libérable d'appareils électroniques dans un véhicule à moteur, avec une section de liaison (12) pour la liaison au véhicule à moteur, avec un premier support (30) relié à la section de liaison (12), qui présente un premier espace de retenue (48) et des premières sections de retenue (42, 46) pour la retenue d'un premier appareil électronique (50), avec un deuxième support (52) avec un deuxième espace de retenue (54) pour la retenue d'un deuxième appareil électronique (56), dans lequel le deuxième support (52) peut être disposé ou est disposé dans le premier espace de retenue (48) et peut être fixé ou est fixé aux premières sections de retenue (42, 46) de manière détachable, dans lequel une distance entre les premières sections de retenue (42, 46) peut être modifiée, **caractérisé en ce que** le deuxième support (52) présente deux deuxièmes sections de retenue (60, 72), lesquelles servent à la fixation de bords de délimitation (62, 74) opposés l'un à l'autre du deuxième appareil électronique (56) et lesquelles sont disposées sur des côtés opposés l'un à l'autre du deuxième espace de retenue (54), dans lequel une distance entre les deux deuxièmes sections de retenue (60, 72) peut être modifiée.

2. Système de fixation (10) selon la revendication 1, **caractérisé en ce que** le premier appareil électronique (50) est un ordinateur tablette et que le deuxième appareil électronique (56) est un téléphone intelligent.

3. Système de fixation (10) selon l'une quelconque des revendications précédentes, **caractérisé en ce que** les premières sections de retenue (42, 46) sont disposées sur les côtés opposés l'un à l'autre du premier espace de retenue (48).

4. Système de fixation (10) selon l'une quelconque des revendications précédentes, **caractérisé en ce que** le deuxième support (52) présente au moins une section de bord (58) à disposer dans une des premières sections de retenue (42).

5. Système de fixation (10) selon l'une quelconque des revendications précédentes, **caractérisé en ce qu'**au moins une deuxième section de retenue (60) des deux sections de retenue (60, 72) sert à fixer un bord de délimitation du deuxième appareil électronique (56).

6. Système de fixation (10) selon la revendication 5, dans le cas d'un rattachement à la revendication 4, **caractérisé en ce que** la au moins une deuxième section de retenue (60) est espacée de la au moins une section de bord (58).

7. Système de fixation (10) selon l'une quelconque des revendications précédentes, **caractérisé en ce que** les deux deuxièmes sections de retenue (60, 72) sont précontraintes dans des directions opposées l'une à l'autre.

8. Système de fixation (10) selon l'une quelconque des revendications précédentes, **caractérisé en ce que** - lorsque le deuxième support (52) est disposé dans le premier espace de retenue (48) et lorsque le deuxième appareil électronique (56) est disposé dans le deuxième espace de retenue (54) - le deuxième appareil électronique (56) est retenu :
a) par une deuxième section de retenue (60) du deuxième support (52) et
b) par une autre deuxième section de retenue (72) du deuxième support (52) et/ou par une des premières sections de retenue (42, 46) du premier support (30).

9. Système de fixation (10) selon l'une quelconque des revendications précédentes, **caractérisé en ce que** le deuxième espace de retenue (54) est délimité par des éléments de coopération de forme ou de friction (79, 76, 78, 80) élastiques, lesquels coopèrent avec des bords de délimitation (62, 74) du deuxième appareil électronique (56) et/ou avec une face arrière du deuxième appareil électronique (56) orientée vers le premier support (30).

10. Système de fixation (10) selon l'une quelconque des revendications précédentes, **caractérisé en ce que** le premier espace de retenue (48) est ouvert latéralement en position d'utilisation du système de fixation (10) et/ou que le deuxième espace de retenue (54) est ouvert latéralement en position d'utilisation du système de fixation (10).

11. Système de fixation (10) selon l'une quelconque des revendications précédentes, **caractérisé en ce qu'**une largeur du premier espace de retenue (48) mesurée en position d'utilisation du système de fixation (10) correspond à une largeur du deuxième espace de retenue (54) mesurée en position d'utilisation du système de fixation (10).

12. Système de fixation (10) selon l'une quelconque des revendications précédentes, **caractérisé en ce que** lorsque le premier appareil électronique (50) sous la forme d'un ordinateur tablette est disposé sur le premier support (30), l'ordinateur tablette dépasse du premier espace de retenue (48) sur les côtés dirigés à l'opposé l'un de l'autre du premier espace de retenue (48).
